# EUROPÄISCHE PATENTSCHRIFT

(11) **EP 2 000 016 B1**
(45) Veröffentlichungstag und Bekanntmachung des Hinweises auf die Patenterteilung: **08.08.2012**
(21) Anmeldenummer: 08009126.7
(22) Anmeldetag: 16.05.2008
(51) Int. Cl.: A01B 73/06, A01C 7/20

(54) **Gezogene landwirtschaftliche Sämaschine**
Pulled agricultural sowing machine
Semeuse agricole tractée

(30) Priorität: 05.06.2007 DE 102007026186
(43) Veröffentlichungstag der Anmeldung: 10.12.2008
(73) Patentinhaber: Amazonen-Werke H. Dreyer GmbH & Co. KG, 49205 Hasbergen-Gaste (DE)
(72) Erfinder: Olderog-Enge, Arndt, 23769 Dänschendorf a/F. (DE); Schmidt, Richard, 27798 Hude (DE); Steen, Rüdiger, 27798 Hude (DE); Tiessen, Reimer Uwe, 26135 Oldenburg (DE)

(56) Entgegenhaltungen:
- US-A- 6 082 467
- US-A1- 2004 025 766
- US-A1- 2005 235 891
- US-B2- 7 051 663

## Beschreibung

Die Erfindung betrifft eine gezogene landwirtschaftliche sämaschine großer Arbeitsbreite mit einem sich über auf den Boden abrollenden Stützelement abstützenden und eine Zugdeichsel aufweisenden Zentralrahmen. An diesem Zentralrahmen ist in dessen vorderen Bereich ein Vorratstank angeordnet, während an dessen hinteren Enden sich jeweils beidseitig seitlich des Zentralrahmens erstreckende Seitenrahmen befinden, an denen Dünger- oder Säelemente mit zugeordneten Vorratsbehältern angeordnet sind. In herkömmlicher Weise sind den Seitenrahmen jeweils den einzelnen Säelementen einzelne Dosierorgane mit Vorratsbehälter zugeordnet. Diese werden in der Regel um in Fahrtrichtung verlaufende Achsen um 90° senkrecht hoch geklappt. Diese Einklappung schränkt die Arbeitsbreite der Maschine stark ein oder erfordert bei größeren Arbeitsbreiten komplizierte Klapptechniken für die Seitenrahmen.

Der Erfindung liegt die Aufgabe zugrunde, eine kompakte in Transportposition zusammenfaltbare Sämaschine mit Düngertank und Saatgutvorratsbehältern zu schaffen.

Diese Aufgabe wird durch die Merkmale des Patentanspruches 1 gelöst. Infolge dieser Maßnahmen ist es möglich, dem jeweiligen Seitenrahmen einen zentralen Vorratsbehälter zuzuordnen und diese dann mit den Seitenrahmen so kompakt zusammen zusammenzuklappen, dass sich die den Seitenrahmen zugeordneten zentralen Saatgutvorratsbehälter zwischen den Seitenrahmen und hinter dem Düngertank befindet.

Die US 2004/00 25 766 A1 zeigt eine Sämaschine großer Arbeitsbreite mit einem Zentralrahmen, dem zwei Vorratstanks für Saatgut zugeordnet sind. Dem Zentralrahmen ist ein mittlerer Tragrahmen für Säschareinheiten sowie sich jeweils seitlich an den Mittelrahmen anschließende Seitenrahmen mit Säschareinheiten zugeordnet. Die Säschareinheiten weisen Säschare und Einzeldosierorange mit jeweils zugeordnetem, als Zwischenbehälter ausgebildeten Vorratsbehälter auf. Ein Teil der Säschareinheiten ist um eine horizontal verlaufende Achse um 90° nach oben verschwenkbar. Die Seitenrahmen sind um eine vertikale Achse um 90° nach vorn verschwenkbar. Hierbei befinden sich die Seitenrahmen unterhalb der Vorratstanks.

Um in einfacher Weise den Dünger vom Vorratstank zu den Düngerelementen, die den Dünger im Boden abgelegen, zuleiten zu können, ist vorgesehen, dass von dem Vorratstank zu den Düngerelementen führende und pneumatisch beaufschlagte Förder- und Verteilvorrichtungen vorgesehen sind.

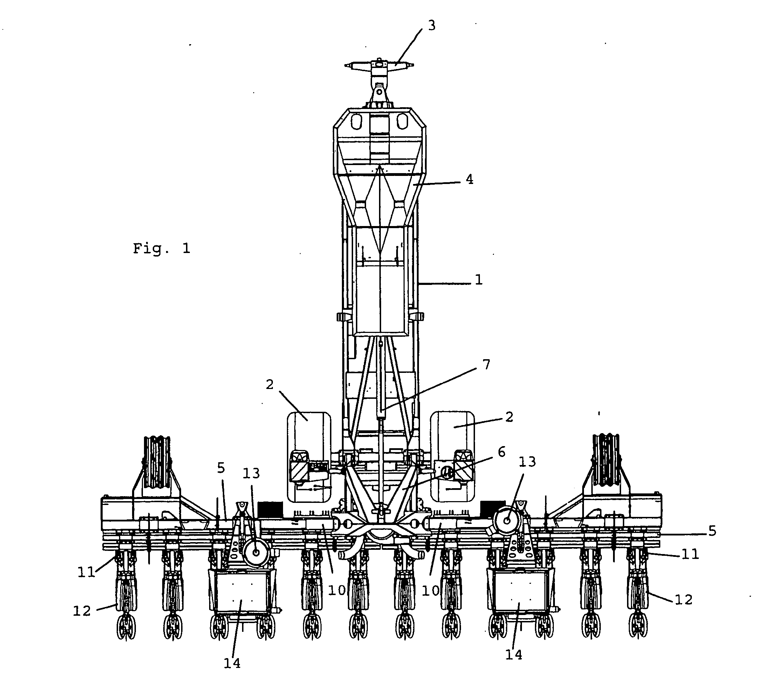

Weitere Einzelheiten der Erfindung sind der Beispielsbeschreibung und den Zeichnungen zu entnehmen. Hierbei zeigen
- Fig. 1: die gezogene landwirtschaftliche Sämaschine in Arbeitsstellung und in Draufsicht,
- Fig. 2: die Sämaschine in Transportstellung, in Draufsicht und in einem vergrößertem Maßstab,
- Fig. 3: die Sämaschine gemäß Fig. 2 in Transportstellung und in Seitenansicht und
- Fig. 4: die Sämaschine gemäß Fig. 2 und 3 in Arbeitsstellung und in der Ansicht IV - IV.

Die gezogene landwirtschaftliche Sämaschine weist eine große Arbeitsbreite, von gemäß Ausführungsbeispiel auf, von 9m, auf. Diese Sämaschine weist einen Zentralrahmen (1) auf, der sich über auf dem Boden abrollende Stützelemente in Form von Laufrädern (2) und eine Zugdeichsel (3) abstützt. Die Zugdeichsel (3) und die Laufräder (2) sind an dem Zentralrahmen (1) angeordnet. Der Zentralrahmen (1) weist in seinem vorderen Bereich den Vorratstank (4) und an seinem hinteren Ende sich jeweils beidseitig des Zentralrahmens (1) erstreckende Seitenrahmen (5) auf. Die Seitenrahmen (5) sind über einen mittleren Kuppelrahmen (6) an dem Zentralrahmen (1) angeordnet. Der Kuppelrahmen (6) ist mittels eines unteren Gelenkes, dessen Gelenkachse quer zur Fahrtrichtung verläuft, verschwenkbar am Zentralrahmen (1) angeordnet. Zwischen dem oberen Bereich des Kuppelrahmens (6) und dem Zentralrahmen (1) ist ein motorisches Stellelement in Form eines doppeltwirkenden Hydraulikzylinders (7) angeordnet. Mittels dieses Hydraulikzylinders (7) lässt sich der Kuppelrahmen (6) mit den daran angeordneten Seitenrahmen (5) verschwenken. An dem Kuppelrahmen (6) sind die Seitenrahmen (5) jeweils mittels eines Schwenkgelenkes (8), deren Schwenkachse (9) in Arbeitsstellung horizontal verlaufen, angeordnet. Zwischen dem Kuppelrahmen (6) und den Seitenrahmen (5) sind als doppeltwirkende Hydraulikzylinder (10) ausgebildete Einschwenkelemente angeordnet.

An den Seitenrahmen (5) sind Dünger- (11) und Säelemente (12) zur Ablage von Dünger und Saatgut im Boden angeordnet. Der auf dem Zentralrahmen (1) angeordnete Vorratstank (4) weist zumindest ein nicht dargestelltes Dosierelement auf, welches das sich im Vorratstank (4) befindliche Material über eine nicht dargestellte Schleuse in pneumatisch beaufschlagte und nicht dargestellte Förderleitungen einspeist. Diese Förderleitungen sind mit Verteilerköpfen (13) verbunden, über welche das Material auf die zu einzelnen Dünger- (11) oder Säelemente (12) führenden Leitungen aufteilt. Über den an den Abgängen der Verteilerköpfe (139 angeordneten Leitungen wird das Material den Dünger- oder Säelementen zugeleitet.

Des Weiteren ist an jedem Seitenrahmen (5) der den Säelementen 12 zugeordnete zentralen Vorratsbehälter (14) mit zentralem Dosierorgan 15 angeordnet. Das zentrale Dosierorgan (15) ist als zentrales Vereinzelungsorgan ausgebildet. Von diesem zentralen Vereinzelungsorgan (15) führen Saatleitungen zu den einzelnen am Seitenrahmen (5) angeordneten Säelementen (12). Über diese Säelemente (12) wird das vereinzelte Saatgut im Boden abgelegt.

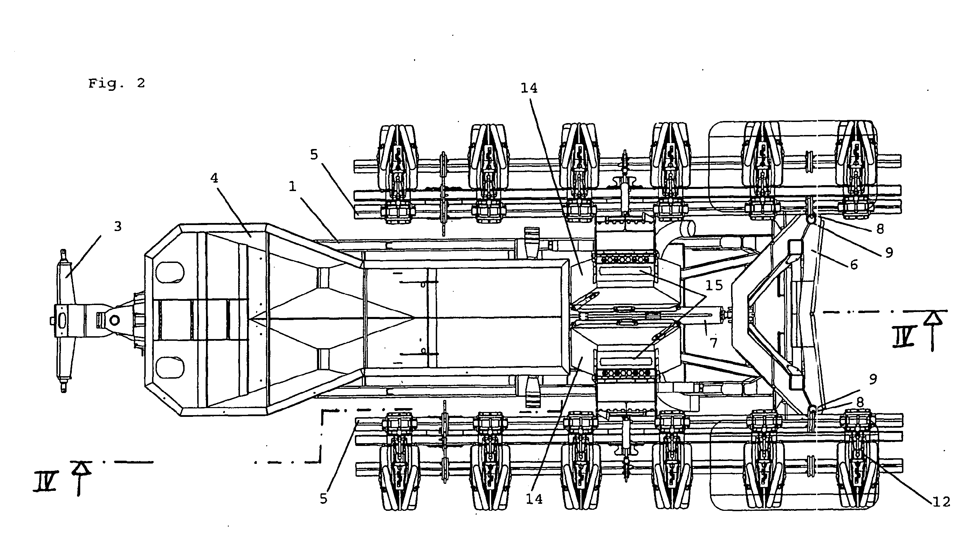

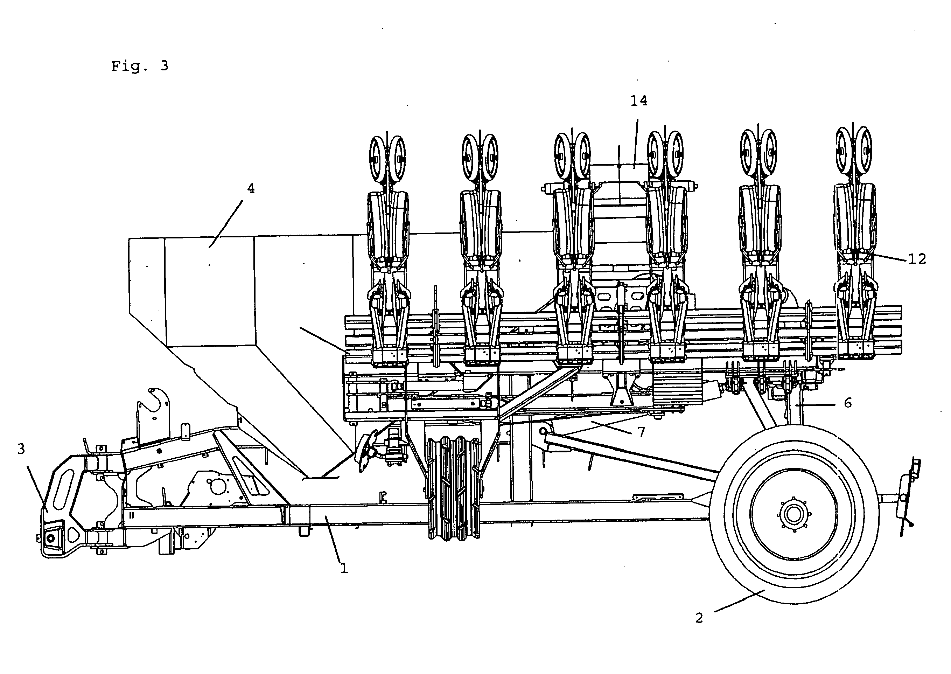

Die Seitenrahmen (5) sind mit den Vorratsbehältern (14) und Dosierelementen (15) sowie den Säelementen (12) gegenüber dem Zentralrahmen (1) aufgrund der Anordnung an dem verschwenkbar angeordneten Kuppelrahmen (6) um eine sich im vorderen Bereich des Seitenrahmens (5) befindliche horizontale und sich quer zur Fahrtrichtung (7) erstreckende Achse um etwa 90° nach oben verschwenkbar angeordnet. Wie bereits erwähnt, sind die Seitenrahmen (5) jeweils um eine sich etwa um ihren inneren Endbereich bzw. dem äußeren Seitenbereich des Zentralrahmens (1) befindliche Schwenkachse (9), die in der um 90° nach oben verschwenkten Stellung des Seitenrahmens und des Mittelrahmens (6) aufrecht verläuft, um 90° nach vorn in eine parallel zur Fahrtrichtung (7) verlaufende Transportstellung verschwenkbar, wie die Fig. 2 bis 4 zeigen.

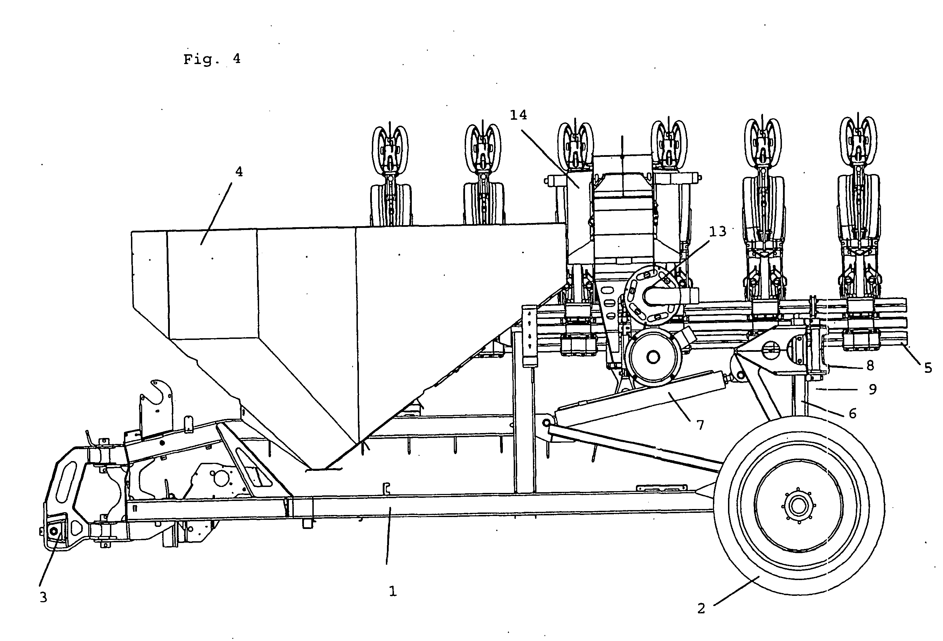

In der Transportposition erstrecken sind die Seitenrahmen (5) im Bereich des Vorratstanks (4) seitlich neben dem Vorratstank und dicht an dem Vorratstank (4) anliegend. Die Vorratsbehälter und die den Vorratsbehältern (14) zugeordneten zentralen Vereinzelungsorgane (15) sind derart auf dem jeweiligen Seitenrahmen (5) angeordnet, dass sie sich bei sich in Transportposition befindlichen Seitenrahmen (5), wie insbesondere die Fig. 2 und 4 zeigen, zwischen den Seitenrahmen und hinter dem Vorratstank (4) befinden. Hierbei liegen in Transportposition die Vorratsbehälter (14), die an dem Seitenrahmen (5) angeordnet sind, mit ihrer Vorderseite möglichst dicht an dem rückwärtigen Ende des auf dem Zentralrahmen (1) angeordneten Vorratstanks (4).

Durch diese Anordnung der an dem Seitenrahmen (5) angeordneten zentralen Vorratsbehälter (14) wird eine äußerst kompakte und platzsparende Bauweise der vorbeschriebenen landwirtschaftlichen Sämaschine in der Transportposition erreicht.

## Patentansprüche

1. Gezogene landwirtschaftliche Sämaschine großer Arbeitsbreite mit einem sich über auf dem Boden abrollenden Stützelementen (2) abstützenden und eine Zugdeichsel (3) aufweisenden Zentralrahmen, wobei an dem Zentralrahmen (1) in dessen vorderen Bereich ein Vorratstank (4) und an dessen hinteren Ende sich jeweils beidseitig seitlich des Zentralrahmens (1) erstreckende Seitenrahmen (5) angeornet sind, **dadurch gekennzeichnet, dass** an jedem seitenrahmen Dünger- (11) und/oder Säelemente (12) mit zugeordneten Vorratsbehälter (14) und zentralem Dosierorgan (15) für mehrere Säelemente (12) angeordnet sind, wobei die Seitenrahmen (5) mit den zugeordneten Vorratsbehältern(14), Dosierorganen (15) und Säelementen (12) gegenüber dem Zentralrahmen (1) jeweils um eine sich im vorderen Bereich der Seitenrahmen (5) befindliche horizontale und sich quer zur Fahrtrichtung (7) erstreckende Achse um 90° nach oben verschwenkbar angeordnet sind, wobei die Seitenrahmen (5) jeweils um eine sich etwa an ihrem inneren Endbereich befindende Schwenkachse, die in der um 90° nach oben verschwenkten Stellung der Seitenrahmen (5) aufrecht verläuft, um 90° nach vorn in eine parallel zur Fahrtrichtung (7) verlaufende Transportposition verschwenkbar sind, wobei die Seitenrahmen (5) sich in Transportposition teilweise seitlich neben dem Vorratstank (4) und dicht an dem Vorratstank (4) anliegend erstrecken, wobei die Vorratsbehälter (14) auf dem Seitenrahmen (5) derart angeordnet sind, dass sie sich bei sich in Transportposition befindlichen Seitenrahmen (5) zwischen den Seitenrahmen (5) und hinter dem Vorratstank (4) befinden.

2. Sämaschine nach Anspruch 1, **dadurch gekennzeichnet, dass** von dem Vorratstank (4) zu den Düngerelementen (11) führende und pneumatisch beaufschlagte Förder- und Verteilvorrichtungen (13) vorgesehen sind.

## Claims

1. Pulled agricultural sowing machine having a large working width and having a central frame which is supported via support elements (2) that roll on the ground and has a drawbar (3), wherein a storage tank (4) is arranged in the front region of the central frame (1) and side frames (5), which extend in each case on both sides laterally to the central frame (1), are arranged at the rear end of said central frame (1), **characterized in that** fertilizer elements (11) and/or sowing elements (12) having associated storage containers (14) and a central metering member (15) for a plurality of sowing elements (12) are arranged on each side frame, wherein the side frames (5) are arranged with the associated storage containers (14), metering members (15) and sowing elements (12) such as to be upwardly pivotable through 90° with respect to the central frame (1) in each case about a horizontal axis that is located in the front region of the side frames (5) and extends transversely to the direction of travel (7), wherein the side frames (5) are pivotable forwards through 90° into a transporting position that extends parallel to the direction of travel (7), in each case about a pivot axis that is located approximately in the inner end region of said side frames (5) and extends in an upright manner when the side frames (5) are in the position pivoted upwards through 90°, wherein the side frames (5) extend, in the transporting position, partially laterally next to the storage tank (4) and in a manner resting closely against the storage tank (4), wherein the storage containers (14) are arranged on the side frame (5) such that, when the side frames (5) are in the transporting position, said storage containers (14) are located between the side frames (5) and behind the storage tank (4).

2. Sowing machine according to Claim 1, **characterized in that** pneumatically actuated delivery and distribution apparatuses (13) which lead from the storage tank (4) to the fertilizer elements (11) are provided.

## Revendications

1. Semoir agricole tracté pour de grandes largeurs comportant un châssis central s'appuyant par des éléments d'appui (2) roulant sur le sol et ayant un timon (3),
* le châssis central (1) ayant dans sa zone avant un réservoir (4) et à son extrémité arrière, des châssis latéraux (5) qui s'étendent des deux côtés latéralement par rapport au châssis central (1),
semoir **caractérisé en ce que**
* chaque châssis latéral comporte des éléments de distribution d'engrais (11) et/ou des éléments de semoir (12) avec des réservoirs (14) associés et un organe central de dosage (15) pour plusieurs éléments de semoir (12),
* les châssis latéraux (5) avec les réservoirs (14) associés, les organes de dosage (15) et les éléments de semoir (12) étant montés de manière pivotante relevables à 90° par rapport au châssis central (1), respectivement autour d'un axe horizontal dans la région avant des châssis latéraux (5) et s'étendant transversalement à la direction de déplacement (7),
* les châssis latéraux (5) pouvant être basculés respectivement autour d'un axe de basculement qui se trouve sensiblement dans leur zone d'extrémité intérieure, cet axe étant debout dans la position des châssis latéraux (5) relevé par basculement de 90°, et ces axes pouvant basculer vers l'avant de 90° dans une position de transport parallèle à la direction de circulation (7),
* les châssis latéraux (5) s'étendant en position de transport, partiellement à côté du réservoir (4) en s'appliquant étroitement contre le réservoir (4),
* les réservoirs (14) des châssis latéraux (5) sont installés pour que lorsque les châssis latéraux (5) sont en position de transport, ils se situent entre les châssis latéraux (5) et derrière le réservoir (4).

2. Semoir selon la revendication 1,
**caractérisé par**
des dispositifs de transfert et de distribution (13), pneumatiques, reliant le réservoir (4) aux éléments de distribution d'engrais (11).
